# EUROPEAN PATENT APPLICATION

(11) **EP 4 020 457 A1**
(43) Date of publication of application: **29.06.2022**
(21) Application number: 21196794.8
(22) Date of filing: 15.09.2021
(51) Int. Cl.: G09G 5/10

(54) **DISPLAY WITH INTEGRATED ILLUMINATOR**

(30) Priority: 24.12.2020 US 202017133875
(71) Applicant: INTEL Corporation, Santa Clara, CA 95054 (US)
(72) Inventor: BARTSCHERER, Marko, Fairview, 97024 (US); AHMED, Khaled, San Jose, 95123 (US)
(74) Representative: Rummler, Felix

(57) **Abstract**

Particular embodiments described herein provide for an electronic device that can be configured to include a user facing camera to capture a video stream of a user, a display presenting content, and display illumination logic to determine the user is insufficiently illuminated in the video stream, in response to the determination, reconfigure a first portion of the display as an illumination region and a second portion of the display as a content region, and increase the brightness of one or more pixels in the illumination region to better illuminate the user. In an example, the display includes micro light emitting diodes (microLEDs) and the one or more areas of the display in the full illumination configuration includes microLEDs at full brightness. In addition, in some examples, the content is resized to accommodate the one or more areas of the display that entered into the full illumination configuration.

## Description

### TECHNICAL FIELD

This disclosure relates in general to the field of computing, and more particularly, to a display with an integrated illuminator.

### BACKGROUND

Some emerging trends in electronic devices include the use of a camera. A camera (or webcam) is a video camera that feeds or streams an image or video in real time to or through a computer to a computer network, such as the Internet. The cameras are typically relatively small devices that sit on a desk, attach to a user's monitor, or are built into the hardware of the electronic device. The cameras can be used during a video chat session involving two or more people, with conversations that include live audio and video, during video calls, teleconferences, and other camera-related processes.

### BRIEF DESCRIPTION OF THE DRAWINGS

To provide a more complete understanding of the present disclosure and features and advantages thereof, reference is made to the following description, taken in conjunction with the accompanying figures, wherein like reference numerals represent like parts, in which:
FIGURE 1A is a simplified block diagram of a system to enable a display with an integrated illuminator, in accordance with an embodiment of the present disclosure;
FIGURE 1B is a simplified block diagram of a system to enable a display with an integrated illuminator, in accordance with an embodiment of the present disclosure;
FIGURE 1C is a simplified block diagram of a system to enable a display with an integrated illuminator, in accordance with an embodiment of the present disclosure;
FIGURE 2A is a simplified block diagram of a portion of a system to enable a display with an integrated illuminator, in accordance with an embodiment of the present disclosure;
FIGURE 2B is a simplified block diagram of a portion of a system to enable a display with an integrated illuminator, in accordance with an embodiment of the present disclosure;
FIGURE 2C is a simplified block diagram of a portion of a system to enable a display with an integrated illuminator, in accordance with an embodiment of the present disclosure;
FIGURE 2D is a simplified block diagram of a portion of a system to enable a display with an integrated illuminator, in accordance with an embodiment of the present disclosure;
FIGURE 2E is a simplified block diagram of a portion of a system to enable a display with an integrated illuminator, in accordance with an embodiment of the present disclosure;
FIGURE 3 is a simplified block diagram of a portion of a system to enable a display with an integrated illuminator, in accordance with an embodiment of the present disclosure;
FIGURE 4 is a simplified block diagram of a portion of a system to enable a display with an integrated illuminator, in accordance with an embodiment of the present disclosure;
FIGURE 5 is a simplified block diagram of an electronic devices that includes a system to enable a display with an integrated illuminator, in accordance with an embodiment of the present disclosure;
FIGURE 6 is a simplified flowchart illustrating potential operations that may be associated with the system in accordance with an embodiment;
FIGURE 7 is a simplified flowchart illustrating potential operations that may be associated with the system in accordance with an embodiment;
FIGURE 8 is a simplified flowchart illustrating potential operations that may be associated with the system in accordance with an embodiment
FIGURE 9 is a block diagram illustrating an example computing system that is arranged in a point-to-point configuration in accordance with an embodiment;
FIGURE 10 is a simplified block diagram associated with an example ARM ecosystem system on chip (SOC) of the present disclosure; and
FIGURE 11 is a block diagram illustrating an example processor core in accordance with an embodiment.

The FIGURES of the drawings are not necessarily drawn to scale, as their dimensions can be varied considerably without departing from the scope of the present disclosure.

### DETAILED DESCRIPTION

### EXAMPLE EMBODIMENTS

The following detailed description sets forth examples of devices, apparatuses, methods, and systems relating to a display with an integrated illuminator. Features such as structure(s), function(s), and/or characteristic(s), for example, are described with reference to one embodiment as a matter of convenience; various embodiments may be implemented with any suitable one or more of the described features.

In the following description, various aspects of the illustrative implementations will be described using terms commonly employed by those skilled in the art to convey the substance of their work to others skilled in the art. However, it will be apparent to those skilled in the art that the embodiments disclosed herein may be practiced with only some of the described aspects. For purposes of explanation, specific numbers, materials, and configurations are set forth in order to provide a thorough understanding of the illustrative implementations. However, it will be apparent to one skilled in the art that the embodiments disclosed herein may be practiced without the specific details. In other instances, well-known features are omitted or simplified in order not to obscure the illustrative implementations.

The terms "over," "under," "below," "between," and "on" as used herein refer to a relative position of one layer or component with respect to other layers or components. For example, one layer disposed over or under another layer may be directly in contact with the other layer or may have one or more intervening layers. Moreover, one layer disposed between two layers may be directly in contact with the two layers or may have one or more intervening layers. In contrast, a first layer "directly on" a second layer is in direct contact with that second layer. Similarly, unless explicitly stated otherwise, one feature disposed between two features may be in direct contact with the adjacent features or may have one or more intervening layers.

Implementations of the embodiments disclosed herein may be formed or carried out on a substrate, such as a non-semiconductor substrate or a semiconductor substrate. In one implementation, the non-semiconductor substrate may be silicon dioxide, an inter-layer dielectric composed of silicon dioxide, silicon nitride, titanium oxide and other transition metal oxides. Although a few examples of materials from which the non-semiconducting substrate may be formed are described here, any material that may serve as a foundation upon which a non-semiconductor device may be built falls within the spirit and scope of the embodiments disclosed herein.

In another implementation, the semiconductor substrate may be a crystalline substrate formed using a bulk silicon or a silicon-on-insulator substructure. In other implementations, the semiconductor substrate may be formed using alternate materials, which may or may not be combined with silicon, that include but are not limited to germanium, indium antimonide, lead telluride, indium arsenide, indium phosphide, gallium arsenide, indium gallium arsenide, gallium antimonide, or other combinations of group III-V or group IV materials. In other examples, the substrate may be a flexible substrate including 2D materials such as graphene and molybdenum disulphide, organic materials such as pentacene, transparent oxides such as indium gallium zinc oxide poly/amorphous (low temperature of dep) III-V semiconductors and germanium/silicon, and other non-silicon flexible substrates. Although a few examples of materials from which the substrate may be formed are described here, any material that may serve as a foundation upon which a semiconductor device may be built falls within the spirit and scope of the embodiments disclosed herein.

In the following detailed description, reference is made to the accompanying drawings that form a part hereof wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense. For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B, and C). Reference to "one embodiment" or "an embodiment" in the present disclosure means that a particular feature, structure, or characteristic described in connection with the embodiment is included in at least one embodiment. The appearances of the phrase "in one embodiment" or "in an embodiment" are not necessarily all referring to the same embodiment. The appearances of the phrase "for example," "in an example," or "in some examples" are not necessarily all referring to the same example.

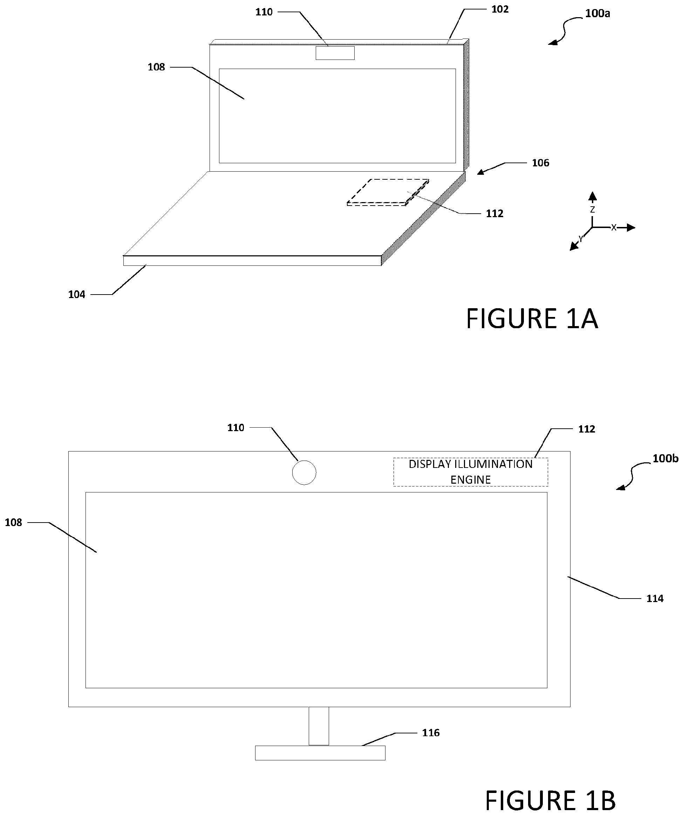

FIGURE 1A is a simplified block diagram of an electronic device 100a configured to enable a display with an integrated illuminator, in accordance with an embodiment of the present disclosure. In an example, electronic device 100a can include a first housing 102 and a second housing 104. First housing 102 can be rotatably coupled to second housing 104 using a hinge 106. First housing 102 can include a display 108 and a camera 110. Second housing 104 can include a keyboard (not shown) and a display illumination engine 112. In some examples, display illumination engine 112 is located in first housing 102 or a portion of display illumination engine 112 is located in first housing and a portion of display illumination engine 112 is located in second housing 104.

Turning to FIGURE 1B, FIGURE 1B is a simplified block diagram of an electronic device 100b configured to enable a display with an integrated illuminator, in accordance with an embodiment of the present disclosure. In an example, electronic device 100b can be a computer monitor, a computer display, free-standing display monitor, etc. Electronic device 100b can include display 108, camera 110, display illumination engine 112, a display housing 114 and a stand 116. Stand 116 can help support electronic device 100b (e.g., on a desk if electronic device 100b is a monitor for a desktop computer).

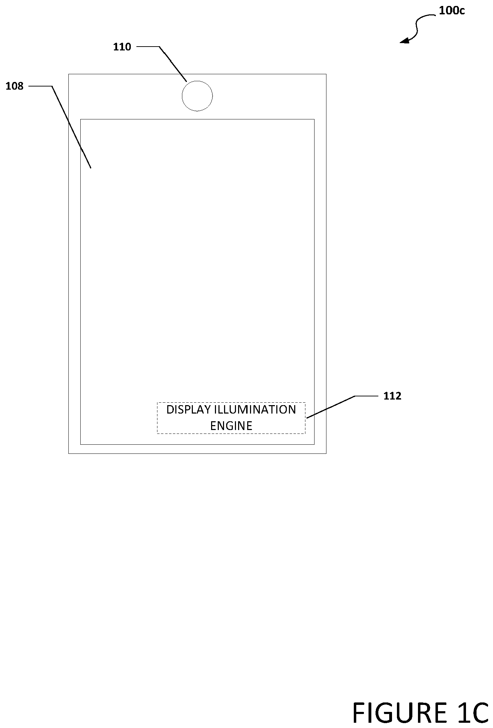

Turning to FIGURE 1C, FIGURE 1C is a simplified block diagram of an electronic device 100c configured to enable a display with an integrated illuminator, in accordance with an embodiment of the present disclosure. In an example, electronic device 100c can be a tablet computer, 2-in-1 computer, convertible computer, etc. Electronic device 100c can include display 108, camera 110, and display illumination engine 112.

Display 108 can be any display that allows for pixel brightness of each pixel or groups of pixels in the display to be set independently. More specifically, display can be a micro-light emitting diode (microLED) display, light emitting diode (LED) display, organic LED (OLED) display, or some other type of display where each pixel or group of pixels in the display can be set independently. In one embodiment, at least one portion of the display is configured to illuminate the user through a full illumination configuration or full brightness configuration while the other portion of display 108 is configured to display content viewable by the user. A microLED display includes of arrays of microLEDs forming the individual pixel elements. MicroLEDs are microscopic-scale versions of LEDs being used today in a plethora of applications and are based on the same gallium nitride technology. Micro-LED dimensions are less than 100µm, or about two orders of magnitude smaller than a conventional LED die. Some microLEDs are as small as 3µm on a side.

When camera 110 is on and capturing a video or picture of a user in ambient light, display illumination engine 112 can analyze the captured video or picture and adjust the illumination of the user using one or more portions of display 108. For example, if the captured video or picture indicates that the user is not being illuminated properly by the ambient light, display illumination engine 112 can increase the brightness from display 108 by adjusting one or more areas of display 108 to a full brightness configuration to increase the lighting on the user. In some examples, display illumination engine 112 can cause the brightness from display 108 to be increased by causing one or more areas of display 108 to be adjusted to a full brightness configuration. Portions of the display that have been reconfigured for full brightness may not be suitable to display content so content presented on display 108 may need to be resized to accommodate the one or more areas of display 108 that are adjusted to a full brightness configuration. In a specific example, display 108 includes a timing controller (TCON) and the TCON is configured to resize the image on display 108 and adjust the brightness of display 108. This means that the resizing of the image on display 108 and adjusting the brightness of display 108 is being done on the backend and it is not being done by a central processing unit of electronic device 100a, 100b, or 100c or by a processor or logic on a system on a chip (SoC) of electronic device 100a, 100b, or 100c.

In a specific illustrative example, display illumination engine 112 can be configured to adjust the brightness of display 108 and the lighting on the user during video calls, teleconferences, other camera-related processes, and other applications that requiring a certain amount illumination. In a specific example, display 108 is a microLED display. Display illumination engine 112 can be configured to resize the incoming image and set the LEDs needed for the backlight to ultrabright levels and allow for a display with an integrated illuminator in a power efficient operating system (OS) agnostic way.

It is to be understood that other embodiments may be utilized and structural changes may be made without departing from the scope of the present disclosure. Substantial flexibility is provided by electronic devices 100a-100c in that any suitable arrangements and configuration may be provided without departing from the teachings of the present disclosure.

For purposes of illustrating certain example techniques of electronic devices 100a-100c, the following foundational information may be viewed as a basis from which the present disclosure may be properly explained. End users have more media and communications choices than ever before. A number of prominent technological trends are currently afoot (e.g., more computing devices, more online video services, more Internet traffic, etc.), and these trends are changing the media delivery landscape. One change is the use of a camera. The term "camera" as used herein includes a webcam or webcam, camera, or some other device that can capture a video image or picture of a user.

As used herein, a camera (or webcam) is a video camera that feeds or streams an image or video in real time to or through a computer to a computer network, such as the Internet. The cameras are typically relatively small devices built into the hardware or chassis of the electronic device, are attached to a user's monitor, or sit on a desk next to the electronic device. The camera can be used during a video chat session involving two or more people, with conversations that include live audio and video, during video calls, teleconferences, etc. In addition, camera software enables users to record a video or stream the video on the Internet. Because video streaming over the Internet requires bandwidth, the video streams typically use some type of compression. The maximum resolution of an electronic device's camera is also lower than most handheld video cameras, as higher resolutions would be reduced during transmission. The lower resolution enables the cameras to be relatively inexpensive compared to most standalone video cameras, but the effect is adequate for video chat sessions. However, due to the lower resolution, lighting can be an important factor for good image quality. The cameras typically include a lens, an image sensor, supporting electronics, and may also include one or even two microphones for sound.

Most current electronic devices are equipped with cameras. In many cases, especially for handheld electronic devices, there are two cameras, one on the front side of the electronic device or on the same side of a general display screen, and the other one on the back side of the electronic device. One fairly widespread usage of the electronic devices is a video call, or video conference in some instances, during which both video images and audio signals are transmitted and received. Most likely the video images are captured with the front side camera, allowing a user of the electronic device to see the display on the electronic device and to be visible at the same time. Video calls enable the callers to hear and see the other person at the same time. Combined with the mobile capacity of the handheld electronic devices, video calls strongly facilitate communication and interaction between the parties.

However, one drawback of the video call conducted on an electronic device is the unpredictable and often far-from-ideal illumination of the user which can render the video calls less attractive or even impossible for participants on the video call to see the user. This problem is especially acute for handheld electronic devices. More specifically, due to the inherent mobility of handheld electronic devices, video calls conducted with handheld electronic devices may be carried out in some locations that have poor or inconsistent lighting. For example, instead of an illuminated conference room, a user of a handheld electronic device may find themselves participating in a video call while in a car, in a dark room, or in some places with weak or impossible-to-adjust lighting, making it difficult for the electronic device to properly capture the user's image.

Some current systems have an external illuminator device for illuminating one or more users in front of a webcam, a communication terminal having a bulb for emitting light, a reflector operatively associated with the bulb for projecting the emitted light, and an arm disposed between the bulb and the terminal for connection to the terminal. The bulb can be adjusted or positioned relative to the webcam to provide viewing of the user through the webcam. Another current system can include an external device for illuminating one or more users in front of a webcam, a communications terminal having a frame, and an external screen having a plurality of bulbs. The plurality of bulbs are disposed in the frame of the terminal to provide illumination to the face or faces of the user. Other current systems for illuminating a user include an external universal lighting system for use with a computer webcam. These systems often include a base clamping mechanism affixed to the electronic device with a light array adjustably connected to the base clamping mechanism for illuminating the user. A diffuser lens can be flexibly connected to the base clamping mechanism and sealingly positioned over the webcam for diffusing received light to try and create a clear image of the illuminated user prior to transmission over the communication network. However, these solutions are bulky and heavy. In addition, one trend in modern devices is to eliminate the bezel around the display leaving no room to place conventional illuminators or most of the current systems used for illumination of a user. What is needed is a display with an integrated illuminator.

A device configured to include display with an integrated illuminator, as outlined in FIGURES 1A and 1B, can resolve these issues (and others). In an example, an electronic device (e.g., electronic devices 100a-100c) can be configured to provide a display illumination engine that may be integrated within the display of an electronic device. The display illumination engine can analyze captured video or a picture and adjust the illumination of the user using light from the display. The display can be a micro-light emitting diode (microLED) display, light emitting diode (LED) display, organic LED (OLED) display, or some other type of display where at least a portion of the display can have a full brightness configuration and the other portion of the display can display content or an image to the user. Because the display is comprised of microLEDs, LEDs, OLEDs, etc. areas on the display with different configurations, profiles, lengths, widths, etc. can be configured to a full brightness or illumination depending on the lighting that needs to be on the user.

For example, if the captured video or picture indicates that the user is not being illuminated properly by the ambient light, the display illumination engine can increase the brightness from display 108 by adjusting one or more areas of display 108 to a full brightness configuration so the brightness of the light from the display can be used to increase the lighting on the user. More specifically, the top, a first side, an opposite second side, and/or bottom of the display can be configured to full brightness or illumination. In addition, the width of the portion or portions of the display that are configured to full brightness or illumination can be adjusted depending on the lighting that needs to be on the user.

Also, content or an image on the display can be resized to accommodate the one or more areas of the display that are adjusted to a full brightness configuration. In a specific example, the display includes a TCON and the TCON is configured to resize the content or image on the display and to adjust the brightness of the light from the display. This means that the resizing of the image on the display and the adjustment of the brightness of the light from display is done on the backend and it is not being done by a central processing unit of the electronic device or by a processor or logic on an SoC.

In an example implementation, electronic devices 100a-100c are meant to encompass a computer, a personal digital assistant (PDA), a laptop or electronic notebook, a cellular telephone, mobile device, personal digital assistants, smartphones, tablets, a smart phone, wearables, Internet-of-things (IoT) device, network elements, or any other device that includes a user facing camera and a display. Electronic devices 100a-100c may include any suitable hardware, software, components, modules, or objects that facilitate the operations thereof, as well as suitable interfaces for receiving, transmitting, and/or otherwise communicating data or information in a network environment. This may be inclusive of appropriate algorithms and communication protocols that allow for the effective exchange of data or information. Electronic devices 100a and 100b may include virtual elements.

In regards to the internal structure associated with electronic devices 100a-100c, electronic devices 100a-100c can include memory elements for storing information to be used in the operations outlined herein. Electronic devices 100a-100c may keep information in any suitable memory element (e.g., random access memory (RAM), read-only memory (ROM), erasable programmable ROM (EPROM), electrically erasable programmable ROM (EEPROM), application specific integrated circuit (ASIC), etc.), software, hardware, firmware, or in any other suitable component, device, element, or object where appropriate and based on particular needs. Any of the memory items discussed herein should be construed as being encompassed within the broad term 'memory element.' Moreover, the information being used, tracked, sent, or received in electronic devices 100a-100c could be provided in any database, register, queue, table, cache, control list, or other storage structure, all of which can be referenced at any suitable timeframe. Any such storage options may also be included within the broad term 'memory element' as used herein.

In certain example implementations, the functions outlined herein may be implemented by logic encoded in one or more tangible media (e.g., embedded logic provided in an ASIC, digital signal processor (DSP) instructions, software (potentially inclusive of object code and source code) to be executed by a processor, or other similar machine, etc.), which may be inclusive of non-transitory computer-readable media. In some of these instances, memory elements can store data used for the operations described herein. This includes the memory elements being able to store software, logic, code, or processor instructions that are executed to carry out the activities described herein.

In an example implementation, elements of electronic devices 100a-100c may include software modules (e.g., display illumination engine 112, light detecting engine 122, video quality image engine 124, screen adjustment engine 126, light adjustment engine 128, and image on screen adjustment engine 130, etc.) to achieve, or to foster, operations as outlined herein. These modules may be suitably combined in any appropriate manner, which may be based on particular configuration and/or provisioning needs. In example embodiments, such operations may be carried out by hardware, implemented externally to these elements, or included in some other network device to achieve the intended functionality. Furthermore, the modules can be implemented as software, hardware, firmware, or any suitable combination thereof. These elements may also include software (or reciprocating software) that can coordinate with other network elements in order to achieve the operations, as outlined herein.

Additionally, electronic devices 100a-100c may include one or more processors that can execute software, logic, or an algorithm to perform activities as discussed herein. A processor can execute any type of instructions associated with the data to achieve the operations detailed herein. In one example, the processors could transform an element or an article (e.g., data) from one state or thing to another state or thing. In another example, the activities outlined herein may be implemented with fixed logic or programmable logic (e.g., software/computer instructions executed by a processor) and the elements identified herein could be some type of a programmable processor, programmable digital logic (e.g., a field programmable gate array (FPGA), an erasable programmable read-only memory (EPROM), an electrically erasable programmable read-only memory (EEPROM)) or an ASIC that includes digital logic, software, code, electronic instructions, or any suitable combination thereof. Any of the potential processing elements, modules, and machines described herein should be construed as being encompassed within the broad term 'processor.'

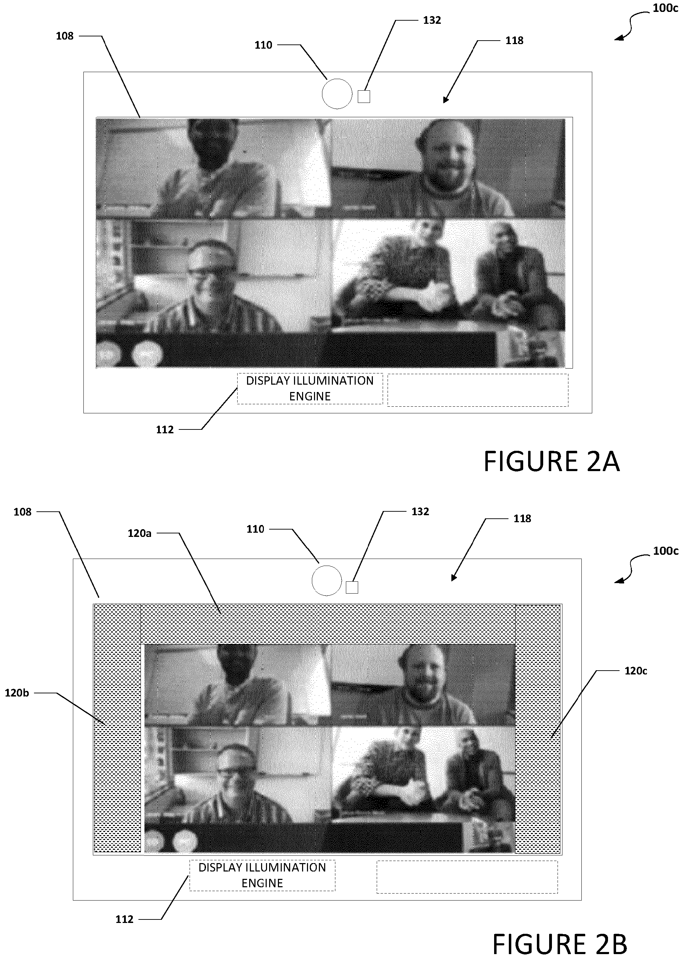

Turning to FIGURE 2A, FIGURE 2A is a simplified block diagram of an electronic device 100c configured to enable a display with an integrated illuminator, in accordance with an embodiment of the present disclosure. In an example, electronic device 100c is a tablet computer type device. In another example, electronic device 100c is a clamshell type device with at least one display. Electronic device 100c can include display 108, camera 110, display illumination engine 112, and a light sensor 132. As illustrated in FIGURE 2A, a user may use electronic device 100c for a video conference where a display image 118 displays participants and or material associated with the video conference. When camera 110 is on and capturing a video or picture of the user, display illumination engine 112 can analyze the captured video or picture and adjust the brightness of the light from display 108 to adjust the illumination of the user from display 108. In some examples, a histogram can be used to analyze the captured video or picture to determine if the brightness from the display is properly illuminating the user. Basically, a histogram is an approximate representation of the distribution of numerical data and a luminosity histogram can be used so show the overall brightness of a captured video or picture. More specifically, the histogram can be used to check for clipping. Clipping is where a region of the captured video or picture is too dark (under-exposed) or too light (over-exposed) for the camera to capture any detail in that region. While the above example discusses use of a histogram, other means to determine if the brightens from the display is properly illuminating the user would be apparent to one skilled.

If the captured video or picture indicates that the user lighting is insufficiently bright, display illumination engine 112 can increase the brightness from display 108 by adjusting one or more areas of display 108 to increase the lighting on the user. In one example, display engine can analyze a histogram of the captured video or image and determine if the exposure if above a predefined threshold. In some examples, light sensor 132 can be configured to help determine an amount of light or illumination that is on a user. In different embodiments, display illumination engine 112 can determine whether the lighting is sufficient based on the sensor data received from light sensor 132, the analysis of the captured video or picture, or both.

Turning to FIGURE 2B, FIGURE 2B is a simplified block diagram of electronic device 100c configured to enable a display with an integrated illuminator, in accordance with an embodiment of the present disclosure. In an example, electronic device 100c is a tablet type device. In another example, electronic device 100c is a clamshell type device with at least one display. Electronic device 100c can include display 108, camera 110, display illumination engine 112, and light sensor 132. In a specific example, display 108 is a microLED display. As illustrated in FIGURE 2B, a user may use electronic device 100c for a video conference. Display illumination engine 112 can analyze the captured video or picture and adjust the illumination of the user from display 108 by adjusting the brightness of the light illuminating from display 108. For example, data illumination engine 112 may analyze the captured video or picture and conclude that the user is not being lighted or illuminated sufficiently. Alternatively, data illumination engine 112 may receive data from light sensor 132 and determine that the user is insufficiently illuminated. Display illumination engine may adjust the brightness from one or more areas of display 108 to be increased to improve the lighting on the user in response to the user being insufficiently illuminated.

In some examples, display illumination engine 112 can increase the brightness from display 108 by adjusting one or more areas of display 108 to a full brightness configuration. More specifically, display illumination engine 112 can create illumination regions 120a-120c on display 108 and the lighting or illumination in illumination regions 120a-120c can be adjusted to a full brightness configuration. Also, display image 118 on display 108 can be resized to accommodate illumination regions 120a-120c on display 108. In a specific example, display 108 includes a TCON and the TCON is configured to resize display image 118 on display 108 and adjust the brightness and/or size of illumination regions 120a-120c. This means that the resizing of display image 118 on display 108 and adjusting the brightness and/or size of illumination regions 120a-120c is done on the backend and it is not being done by a central processing unit of electronic device 100a or by a processor or logic on an SoC.

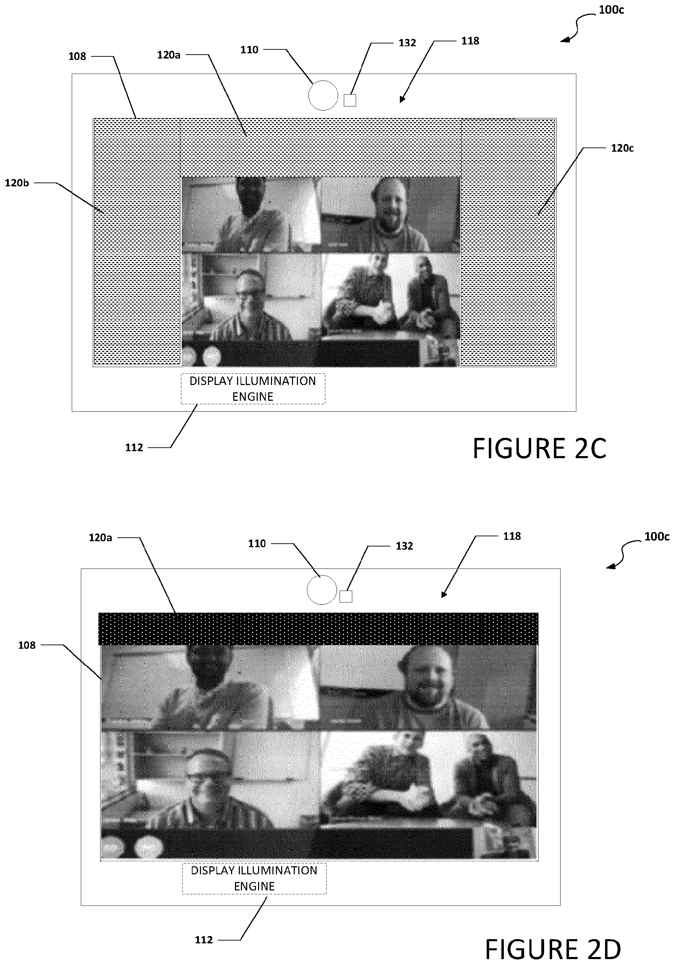

Turning to FIGURE 2C, FIGURE 2C is a simplified block diagram of electronic device 100c configured to enable a display with an integrated illuminator, in accordance with an embodiment of the present disclosure. In an example, electronic device 100c is a tablet type device. In another example, electronic device 100c is a clamshell type device with at least one display. Electronic device 100c can include display 108, camera 110, display illumination engine 112, and light sensor 132. In a specific example, display 108 is a microLED display. As illustrated in FIGURE 2C, a user may use electronic device 100c for a video conference. Display illumination engine 112 can analyze the captured video or picture (e.g., using a histogram or some other means) and adjust the brightness of the light from display 108 to adjust the illumination of the user from display 108. For example, if the captured video or picture indicates that the user is not being lighted or illuminated properly and/or data from light sensor 132 determines that the amount of light or illumination that is on a user is not properly illuminating the user, display illumination engine 112 can increase the brightness from display 108 by adjusting one or more areas of display 108 to a full brightness configuration to increase the lighting on the user.

In some examples, display illumination engine 112 can dynamically adjust the dimensions and/or location of the one or more regions of display 108 having a full brightness configuration. More specifically, display illumination engine 112 can dynamically adjust the placement and size of illumination regions 120a-120c on display 108 regions 120to create sufficient brightness to illuminate the user. In other examples, display illumination engine 112 can dynamically adjust the dimensions and placement of the illumination regions along with the brightness of the illumination regions to create sufficient brightness to illuminate the user while reducing use discomfort from the illumination. For example, illumination regions 120b and 120c in FIGURE 2C are relatively larger than illumination regions 120b and 120c in FIGURE 2B and therefore, illumination regions 120b and 120c in FIGURE 2C provide increased illumination on the user. Also, display image 118 on display 108 can be resized to accommodate illumination regions 120a-120c on display 108.

Turning to FIGURE 2D, FIGURE 2D is a simplified block diagram of electronic device 100c configured to enable a display with an integrated illuminator, in accordance with an embodiment of the present disclosure. In an example, electronic device 100c is a tablet type device. In another example, electronic device 100c is a clamshell type device with at least one display. Electronic device 100c can include display 108, camera 110, display illumination engine 112, and light sensor 132. In a specific example, display 108 is a microLED display. As illustrated in FIGURE 2D, a user may use electronic device 100c for a video conference. Display illumination engine 112 can analyze the captured video or picture and adjust the brightness of the light from display 108 to adjust the illumination of the user from display 108. For example, if the captured video or picture indicates that the lighting is too high and the user is not being lighted properly and/or data from light sensor 132 determines that the amount of light or illumination that is on a user is not properly illuminating the user, display illumination engine 112 can decrease the brightness from display 108 by adjusting one or more areas of display 108 to a low or lower brightness configuration or turned off to decrease the lighting on the user.

In some examples, display illumination engine 112 can cause the brightness from display 108 to be decreased by causing one or more areas of display 108 to be adjusted to a less than full brightness configuration or turned off. More specifically, display illumination engine 112 can turn off illumination regions 120b and 120c on display 108 and reduce the illumination from 120a. Also, display image 118 on display 108 can be resized to accommodate illumination region 120a and the absence of illumination region 120b and 120c on display 108.

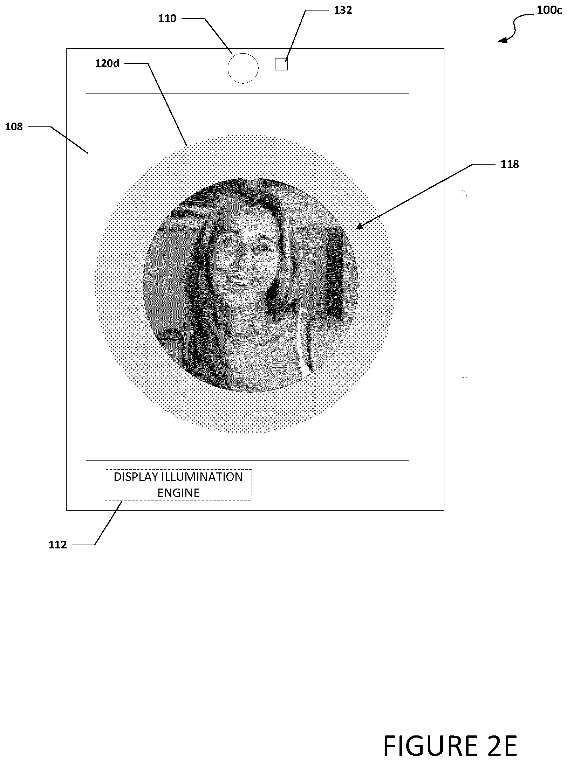

Turning to FIGURE 2E, FIGURE 2E is a simplified block diagram of electronic device 100c configured to enable a display with an integrated illuminator, in accordance with an embodiment of the present disclosure. In an example, electronic device 100c is a tablet type device. In another example, electronic device 100c is a clamshell type device with at least one display. Electronic device 100c can include display 108, camera 110, display illumination engine 112, and light sensor 132. In a specific example, display 108 is a microLED display. As illustrated in FIGURE 2E, a user may use electronic device 100c to take a picture of themselves or a "selfie" or a video of themselves. Display illumination engine 112 can define illumination regions that enhance the user for the selfie, during the video, or even during a video call. For example, as illustrated in FIGRUE 2E, display illumination engine 112 can dynamically adjust the dimensions and placement of illumination region 120d, along with the brightness of illumination region, 120d to create a ring light around the user. The light ring is a common tool for photographers to create a halo in the eye or eyes of the user. In other examples, display illumination engine 112 can adjust the dimensions and placement of illumination regions on display 108 to further enhance the appearance of the user.

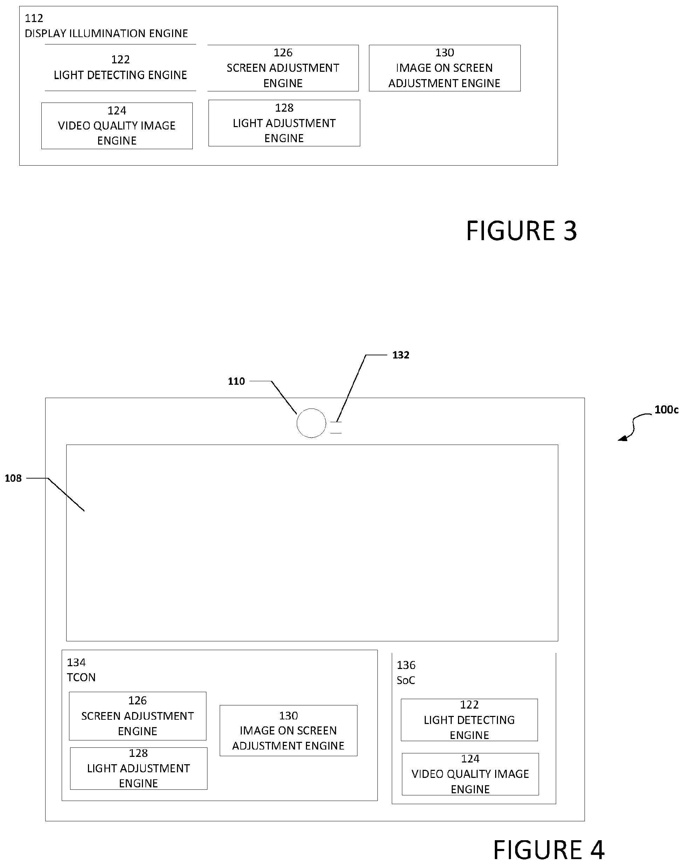

Turning to FIGURE 3, FIGURE 3 is a simplified block diagram of a display illumination engine 112 configured to help enable a display with an integrated illuminator, in accordance with an embodiment of the present disclosure. In an example, display illumination engine 112 can include a light detecting engine 122, a video quality image engine 124, a screen adjustment engine 126, a light adjustment engine 128, and an image on screen adjustment engine 130. Display illumination engine 112 can be located in a first housing (e.g., first housing 102 illustrated in FIGURE 1A), in a second housing (e.g., second housing 104 illustrated in FIGURE 1A), in a computer monitor (e.g., electronic device 100b illustrated in FIGURE 1B), in a tablet (e.g., electronic device 100c illustrated in FIGURE 1C), or some other device that includes a display and a user facing camera. Also, one or more of light detecting engine 122, video quality image engine 124, screen adjustment engine 126, light adjustment engine 128, and/or image on screen adjustment engine 130 may be located in the same housing or portion of an electronic device or a different housing or portion of the electronic device. For example, screen adjustment engine 126, light adjustment engine 128, and/or image on screen adjustment engine 130 may be located in a first housing that includes a display (e.g., first housing 102 that includes display 108) while light detecting engine 122 and video quality image engine 124 are located in a second housing (e.g., second housing 104). In another example, screen adjustment engine 126, light adjustment engine 128, and/or image on screen adjustment engine 130 may be located in a TCON while light detecting engine 122 and video quality image engine 124 are located in an SoC.

Light detecting engine 122 is configured to determine an amount of light or illumination that is on a user. For example, light detection engine 122 can receive data from a light sensor (e.g., light sensor 132) that can be used to determine an amount of light or illumination that is on a user. Video quality image engine 124 can be configured to analyzed a video image of the user and determine if the amount of light or illumination that is on a user is properly illuminating the user. For example, if video quality image engine 124 analyzes a video image of the user and determines the image of the user is too dark or if the user is only partially illuminated, then the user is not properly illuminated.

Screen adjustment engine 126 can be configured to cause one or more illumination regions (e.g., illumination regions 120a-120c) to be located on display 108. For example, screen adjustment engine 126 can create illumination regions 120a-120c on display 108 by increase pixel brightness to a full pixel brightness in illumination regions 120a-120c, as illustrated in FIGURE 2B, to try and help properly illuminate the user. Light adjustment engine 128 can be configured to adjust the intensity of each of the illumination regions on display 108. Image on screen adjustment engine 130 can be configured to resize an image that is displayed on display 108 to accommodate the one or more illumination regions on display 108.

Turning to FIGURE 4, FIGURE 4 is a simplified block diagram of electronic device 100c configured to enable a display with an integrated illuminator, in accordance with an embodiment of the present disclosure. In an example, electronic device 100c is a tablet type device. In another example, electronic device 100c is a clamshell type device with at least one display. Electronic device 100c can include display 108, camera 110, TCON 134, and SoC 136. TCON 134 can include screen adjustment engine 126, light adjustment engine 128, and image on screen adjustment engine 130. SoC 136 can include light detecting engine 122 and video quality image engine 124.

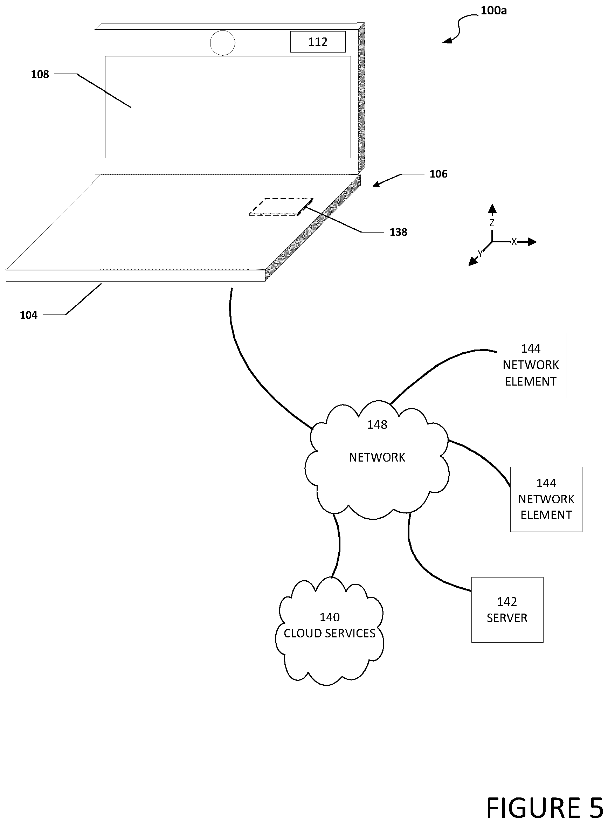

Turning to FIGURE 5, FIGURE 5 is a simplified block diagram of electronic device 100a. In an example, electronic device 100a may be a laptop computer. Electronic device 100a can include first housing 102 and second housing 104. First housing 102 can be rotatably coupled to second housing 104 using hinge 106. First housing 102 can include display 108, camera 110, and display illumination engine 112. Second housing 104 can include a user illumination activator 138. In an example, user illumination activator 138 can be an activation mechanism that a user can use to turn on and/or adjust the illumination on display 108. For example, user illumination activator 138 may be a button, switch, hot key, etc. that a user can activate (press, switch, etc.) to cause one or more illumination regions (e.g., illumination regions 120a-120c) to become located on display 108 or that a user can deactivate to cause one or more illumination regions to be removed from display 108. In other examples, the user can use illumination activator 138 to adjust the intensity or illumination from the one or more illumination regions up or down. More specifically, based on the user's interaction with illumination activator 138, display illumination engine 112 can create one or more illumination regions on display 108, adjust the intensity of each of the illumination regions, and/or resize an image that is displayed on display 108 to accommodate the one or more illumination regions on display 108. Electronic device 102a (and 102b and 102c), may be in communication with cloud services 140, server 142, and/or network element 144 using network 148. In some examples, electronic device 102a (and 102b and 102c), may be a standalone device and not connected to network 148 or another device. For example, a user may record a video presentation of themselves while offline.

Elements of FIGURE 5 may be coupled to one another through one or more interfaces employing any suitable connections (wired or wireless), which provide viable pathways for network (e.g., network 148, etc.) communications. Additionally, any one or more of these elements of FIGURE 5 may be combined or removed from the architecture based on particular configuration needs. Electronic devices 100a-100c may include a configuration capable of transmission control protocol/Internet protocol (TCP/IP) communications for the transmission or reception of packets in a network. Electronic devices 100a-100c may also operate in conjunction with a user datagram protocol/IP (UDP/IP) or any other suitable protocol where appropriate and based on particular needs.

Turning to the infrastructure of FIGURE 5, generally, the system may be implemented in any type or topology of networks. Network 148 represents a series of points or nodes of interconnected communication paths for receiving and transmitting packets of information that propagate through the system. Network 148 offers a communicative interface between nodes, and may be configured as any local area network (LAN), virtual local area network (VLAN), wide area network (WAN), wireless local area network (WLAN), metropolitan area network (MAN), Intranet, Extranet, virtual private network (VPN), and any other appropriate architecture or system that facilitates communications in a network environment, or any suitable combination thereof, including wired and/or wireless communication.

In the system, network traffic, which is inclusive of packets, frames, signals, data, etc., can be sent and received according to any suitable communication messaging protocols. Suitable communication messaging protocols can include a multi-layered scheme such as Open Systems Interconnection (OSI) model, or any derivations or variants thereof (e.g., Transmission Control Protocol/Internet Protocol (TCP/IP), user datagram protocol/IP (UDP/IP)). Messages through the network could be made in accordance with various network protocols, (e.g., Ethernet, Infiniband, OmniPath, etc.). Additionally, radio signal communications over a cellular network may also be provided in the system. Suitable interfaces and infrastructure may be provided to enable communication with the cellular network.

The term "packet" as used herein, refers to a unit of data that can be routed between a source node and a destination node on a packet switched network. A packet includes a source network address and a destination network address. These network addresses can be Internet Protocol (IP) addresses in a TCP/IP messaging protocol. The term "data" as used herein, refers to any type of binary, numeric, voice, video, textual, or script data, or any type of source or object code, or any other suitable information in any appropriate format that may be communicated from one point to another in electronic devices and/or networks. The data may help determine a status of a network element or network. Additionally, messages, requests, responses, and queries are forms of network traffic, and therefore, may comprise packets, frames, signals, data, etc.

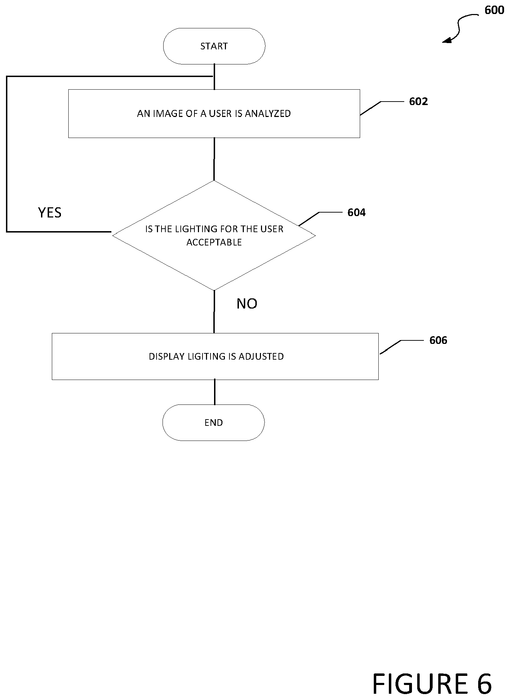

Turning to FIGURE 6, FIGURE 6 is an example flowchart illustrating possible operations of a flow 600 that may be associated with enabling a display with an integrated illuminator, in accordance with an embodiment. In an embodiment, one or more operations of flow 600 may be performed by display illumination engine 112, light detecting engine 122, video quality image engine 124, screen adjustment engine 126, light adjustment engine 128, and image on screen adjustment engine 130. At 602, an image of a user is analyzed. For example, the system may analyze an image in a video feed from a camera. At 604, the system determines if the light for the user is acceptable. For example, a validation engine or logic, can validate whether the current illumination settings are appropriate or acceptable and are sufficiently or appropriately illuminate the user or a subject. The validation can also be validating that the current illumination settings are appropriate or acceptable to the user or subject. In one instance, the illumination settings are acceptable to the user or subject if they do not cause discomfort to the user or subject. Validation engine or logic may analyze the video stream of the user to determine whether the illumination settings are acceptable to the user. For instance, determining that the user squinting or not looking directly at the camera may be indicators that the user is experiencing discomfort with the current illumination settings and thus require an adjustment to the settings

If the lighting for the user is acceptable, then the system returns to 602 and a (new) image of the user is analyzed. If the lighting for the user is not acceptable, then a display lighting is adjusted, as in 606. For example, if the system determines that the user is not properly illuminated enough, then the system can increase the brightness and/or the intensity of one or more illumination regions on display by adjusting one or more areas of display 108 to a full brightness configuration. Also, if the system determines that the user is illuminated too much, then one or more illumination regions may be removed from the display and/or the intensity of one or more illumination regions can be decreased. In an example, the system can use machine learning or analysis to help determine if the settings are acceptable to the user and if the user is illuminated too much and/or the illumination causes discomfort to the user. For example, if the system detects that the user is squinting at the display, machine learning or analysis can determine that the illumination is too much and/or the illumination causes discomfort to the user. The machine learning can adjust the illumination setting by reconfiguring the illumination region. The reconfiguration can include moving the position of the illumination region, changing the size and/or shape of the illumination region, adjusting the brightness and/or the intensity of the illumination region, and/or some other reconfiguration of the illumination region. In addition, the machine learning or analysis can be used to determine a user's preference for the location and/or brightness of the illumination regions.

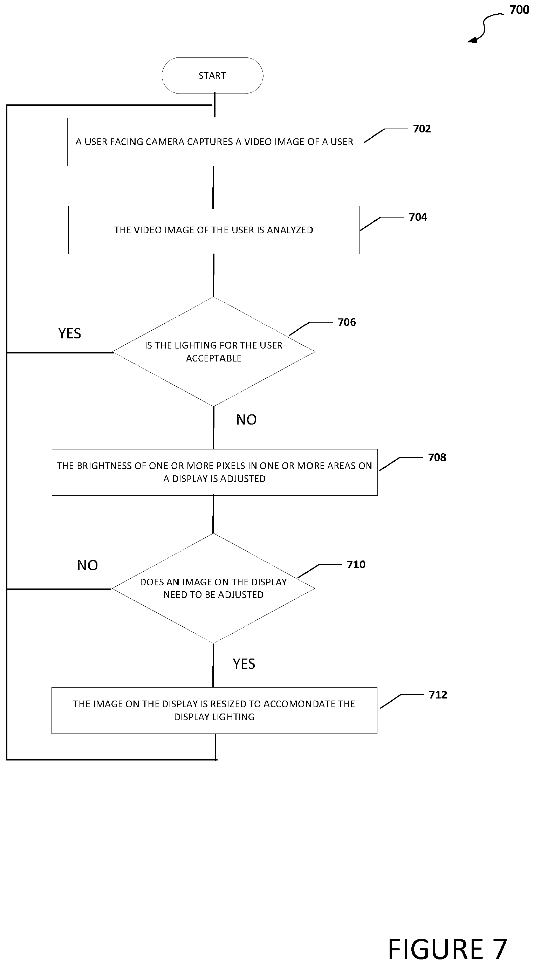

Turning to FIGURE 7, FIGURE 7 is an example flowchart illustrating possible operations of a flow 700 that may be associated with enabling a display with an integrated illuminator, in accordance with an embodiment. In an embodiment, one or more operations of flow 700 may be performed by display illumination engine 112, light detecting engine 122, video quality image engine 124, screen adjustment engine 126, light adjustment engine 128, and image on screen adjustment engine 130. At 702, a user facing camera captures a video image of a user. At 704, the video image of the user is analyzed. At 706, the system determines if the lighting for the user is acceptable. For example, the lighting may be ambient lighting, ambient lighting plus lighting from the display, etc. If the lighting for the user is acceptable, then the system returns to 702 and a (new) video image of the user is captured by the user facing camera. If the lighting for the user is not acceptable, then the brightness of one or more pixels in one or more areas on a display is adjusted, as in 708. At 710, the system determines if an image on the display needs to be adjusted. If an image on the display does not need to be adjusted, then the system returns to 702 and a (new) video image of the user is captured by the user facing camera. If an image on the display does need to be adjusted, then the image on the display is resized to accommodate the display lighting, as in 710 and the system returns to 702 and a (new) video image of the user is captured by the user facing camera. In some examples, when the user facing camera is capturing a video image of the user, the video image of the user is repeatedly being analyzed (e.g., every second, thirty (30) seconds, one (1) minute, five (5) minutes, etc.) to determine if the user is properly illuminated and to adjust the brightness of one or more areas of display.

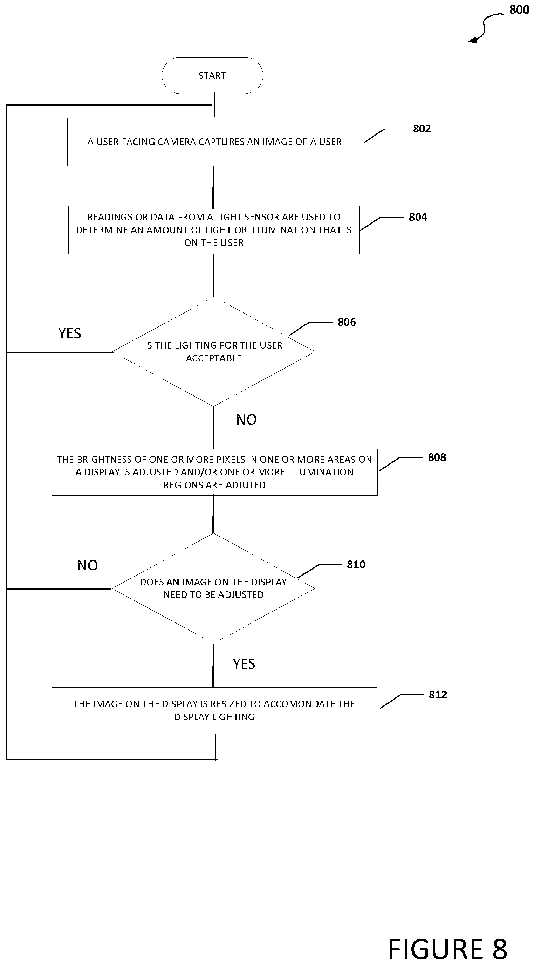

Turning to FIGURE 8, FIGURE 8 is an example flowchart illustrating possible operations of a flow 800 that may be associated with enabling a display with an integrated illuminator, in accordance with an embodiment. In an embodiment, one or more operations of flow 800 may be performed by display illumination engine 112, light detecting engine 122, video quality image engine 124, screen adjustment engine 126, light adjustment engine 128, and image on screen adjustment engine 130. At 802, a user facing camera captures an image of a user. At 804, reading or data from a light sensor are used to determine an amount of light or illumination that is on the user. At 806, the system determines if the lighting for the user is acceptable. For example, the lighting may be ambient lighting, ambient lighting plus lighting from the display, etc. If the lighting for the user is acceptable, then the system returns to 802 and a (new) image of the user is captured by the user facing camera. If the lighting for the user is not acceptable, then the brightness of one or more pixels in one or more areas on a display is adjusted and/or one or more illumination regions are adjusted, as in 808. At 810, the system determines if an image on the display needs to be adjusted. For example, the image on the display may need to be adjusted to accommodate one or more illumination regions. More specifically, if one or more illumination regions need to be added, then the image on the display needs to be reduced to accommodate the addition of one or more illumination regions. If an image on the display does not need to be adjusted, then the system returns to 802 and a (new) image of the user is captured by the user facing camera. If an image on the display does need to be adjusted, then the image on the display is resized to accommodate the illumination region, as in 810 and the system returns to 802 and a (new) image of the user is captured by the user facing camera. In some examples, when the user facing camera is capturing an image of the user, the data from the light sensor is repeatedly being analyzed (e.g., every second, thirty (30) seconds, one (1) minute, five (5) minutes, etc.) to determine if the user is properly illuminated and to adjust the brightness of one or more areas of display. In other examples, data from the light sensor can be analyzed when the user facing camera is activated or first turned on, when the user first starts a video conference, when the user has stepped away and then returns, etc.

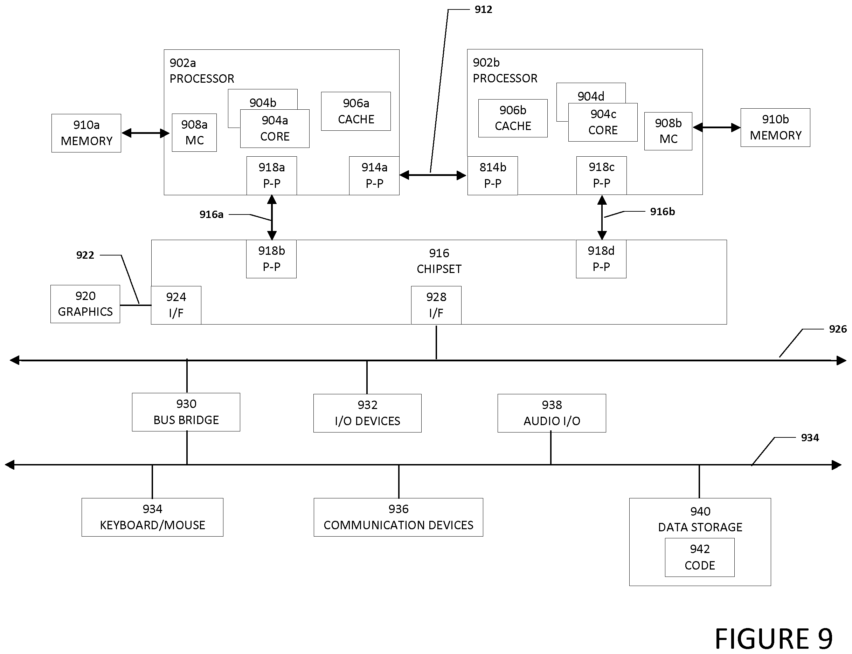

Turning to FIGURE 9, FIGURE 9 illustrates a computing system 900 that is arranged in a point-to-point (PtP) configuration according to an embodiment. In particular, FIGURE 9 shows a system where processors, memory, and input/output devices are interconnected by a number of point-to-point interfaces. Generally, one or more of electronic devices 100a-100c may be configured in the same or similar manner as computing system 900.

As illustrated in FIGURE 9, system 900 may include several processors, of which only two, processors 902a and 902b, are shown for clarity. While two processors 902a and 902b are shown, it is to be understood that an embodiment of system 900 may also include only one such processor. Processors 902a and 902b may each include a set of cores (i.e., processors cores 904a and 904b and processors cores 904c and 904d) to execute multiple threads of a program. The cores may be configured to execute instruction code in a manner similar to that discussed above with reference to FIGURES 1-8. Each processor 902a and 902b may include at least one shared cache 906a and 906b respectively. Shared caches 906a and 906b may each store data (e.g., instructions) that are utilized by one or more components of processors 902a and 902b, such as processor cores 904a and 904b of processor 902a and processor cores 904c and 904d of processor 902b.

Processors 902a and 902b may also each include integrated memory controller logic (MC) 908a and 908b respectively to communicate with memory elements 910a and 910b. Memory elements 910a and/or 910b may store various data used by processors 902a and 902b. In alternative embodiments, memory controller logic 908a and 908b may be discrete logic separate from processors 902a and 902b.

Processors 902a and 902b may be any type of processor and may exchange data via a point-to-point (PtP) interface 912 using point-to-point interface circuits 914a and 914b respectively. Processors 902a and 902b may each exchange data with a chipset 916 via individual point-to-point interfaces 918a and 918b using point-to-point interface circuits 920a-920d. Chipset 916 may also exchange data with a high-performance graphics circuit 922 via a high-performance graphics interface 924, using an interface circuit 926, which could be a PtP interface circuit. In alternative embodiments, any or all of the PtP links illustrated in FIGURE 9 could be implemented as a multi-drop bus rather than a PtP link.

Chipset 916 may be in communication with a bus 928 via an interface circuit 930. Bus 928 may have one or more devices that communicate over it, such as a bus bridge 932 and I/O devices 934. Via a bus 936, bus bridge 932 may be in communication with other devices such as a keyboard/mouse 938 (or other input devices such as a touch screen, trackball, etc.), communication devices 940 (such as modems, network interface devices, or other types of communication devices that may communicate through a network), audio I/O devices 942, and/or a data storage device 944. Data storage device 944 may store code 946, which may be executed by processors 902a and/or 902b. In alternative embodiments, any portions of the bus architectures could be implemented with one or more PtP links.

The computer system depicted in FIGURE 9 is a schematic illustration of an embodiment of a computing system that may be utilized to implement various embodiments discussed herein. It will be appreciated that various components of the system depicted in FIGURE 9 may be combined in a system-on-a-chip (SoC) architecture or in any other suitable configuration. For example, embodiments disclosed herein can be incorporated into systems including mobile devices such as smart cellular telephones, tablet computers, personal digital assistants, portable gaming devices, etc. It will be appreciated that these mobile devices may be provided with SoC architectures in at least some embodiments.

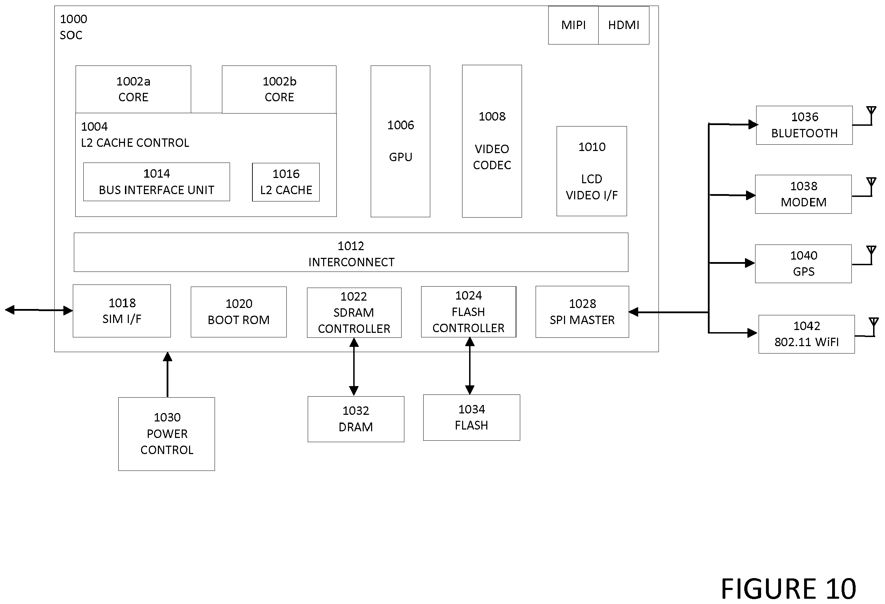

Turning to FIGURE 10, FIGURE 10 is a simplified block diagram associated with an example ecosystem SOC 1000 of the present disclosure. At least one example implementation of the present disclosure can include the device pairing in a local network features discussed herein and an ARM component. For example, the example of FIGURE 10 can be associated with any ARM core (e.g., A-9, A-15, etc.). Further, the architecture can be part of any type of tablet, smartphone (inclusive of Android^{™} phones, iPhones^{™}), iPad^{™}, Google Nexus^{™}, Microsoft Surface^{™}, personal computer, server, video processing components, laptop computer (inclusive of any type of notebook), Ultrabook^{™} system, any type of touch-enabled input device, etc.

In this example of FIGURE 10, ecosystem SOC 1000 may include multiple cores 1002a and 1002b, an L2 cache control 1004, a graphics processing unit (GPU) 1006, a video codec 1008, a liquid crystal display (LCD) I/F 1010 and an interconnect 1012. L2 cache control 1004 can include a bus interface unit 1014, a L2 cache 1016. Liquid crystal display (LCD) I/F 1010 may be associated with mobile industry processor interface (MIPI)/ high-definition multimedia interface (HDMI) links that couple to an LCD.

Ecosystem SOC 1000 may also include a subscriber identity module (SIM) I/F 1018, a boot read-only memory (ROM) 1020, a synchronous dynamic random-access memory (SDRAM) controller 1022, a flash controller 1024, a serial peripheral interface (SPI) master 1028, a suitable power control 1030, a dynamic RAM (DRAM) 1032, and flash 1034. In addition, one or more embodiments include one or more communication capabilities, interfaces, and features such as instances of Bluetooth^{™} 1036, a 3G modem 0138, a global positioning system (GPS) 1040, and an 802.11 Wi-Fi 1042.

In operation, the example of FIGURE 10 can offer processing capabilities, along with relatively low power consumption to enable computing of various types (e.g., mobile computing, high-end digital home, servers, wireless infrastructure, etc.). In addition, such an architecture can enable any number of software applications (e.g., Android^{™}, Adobe^{®} Flash^{®} Player, Java Platform Standard Edition (Java SE), JavaFX, Linux, Microsoft Windows Embedded, Symbian and Ubuntu, etc.). In at least one example embodiment, the core processor may implement an out-of-order superscalar pipeline with a coupled low-latency level-2 cache.

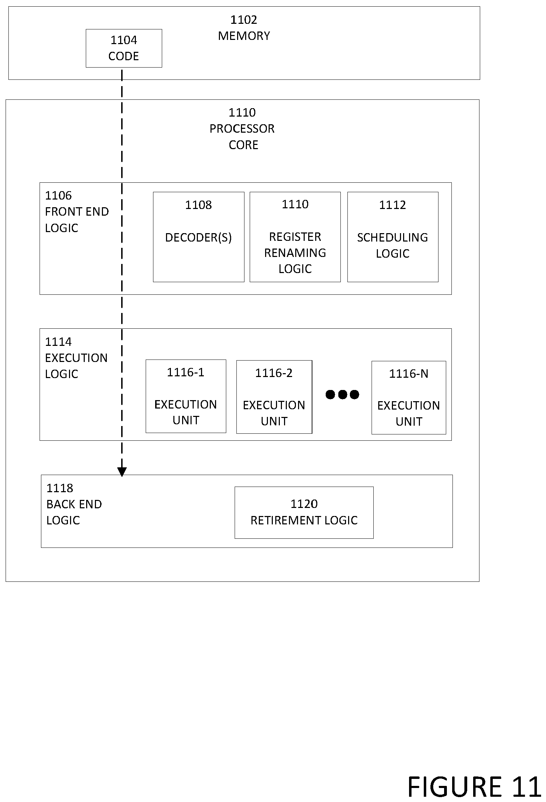

FIGURE 11 illustrates a processor core 1100 according to an embodiment. Processor core 1100 may be the core for any type of processor, such as a micro-processor, an embedded processor, a digital signal processor (DSP), a network processor, or other device to execute code. Although only one processor core 1100 is illustrated in Figure 11, a processor may alternatively include more than one of the processor core 1100 illustrated in Figure 11. For example, processor core 1100 represents one example embodiment of processors cores 904a, 904b, 904c, and 904d shown and described with reference to processors 902a and 902b of FIGURE 9. Processor core 1100 may be a single-threaded core or, for at least one embodiment, processor core 1100 may be multithreaded in that it may include more than one hardware thread context (or "logical processor") per core.

FIGURE 11 also illustrates a memory 1102 coupled to processor core 1100 in accordance with an embodiment. Memory 1102 may be any of a wide variety of memories (including various layers of memory hierarchy) as are known or otherwise available to those of skill in the art. Memory 1102 may include code 1104, which may be one or more instructions, to be executed by processor core 1100. Processor core 1100 can follow a program sequence of instructions indicated by code 1104. Each instruction enters a front-end logic 1106 and is processed by one or more decoders 1108. The decoder may generate, as its output, a micro operation such as a fixed width micro operation in a predefined format, or may generate other instructions, microinstructions, or control signals that reflect the original code instruction. Front-end logic 1106 also includes register renaming logic 1110 and scheduling logic 1112, which generally allocate resources and queue the operation corresponding to the instruction for execution.

Processor core 1100 can also include execution logic 1114 having a set of execution units 1116-1 through 1116-N. Some embodiments may include a number of execution units dedicated to specific functions or sets of functions. Other embodiments may include only one execution unit or one execution unit that can perform a particular function. Execution logic 1114 performs the operations specified by code instructions.

After completion of execution of the operations specified by the code instructions, back-end logic 1118 can retire the instructions of code 1104. In one embodiment, processor core 1100 allows out of order execution but requires in order retirement of instructions. Retirement logic 1120 may take a variety of known forms (e.g., re-order buffers or the like). In this manner, processor core 1100 is transformed during execution of code 1104, at least in terms of the output generated by the decoder, hardware registers and tables utilized by register renaming logic 1110, and any registers (not shown) modified by execution logic 1114.

Although not illustrated in FIGURE 11, a processor may include other elements on a chip with processor core 1100, at least some of which were shown and described herein with reference to FIGURE 9. For example, as shown in FIGURE 9, a processor may include memory control logic along with processor core 1100. The processor may include I/O control logic and/or may include I/O control logic integrated with memory control logic.

It is important to note that the operations in the preceding flow diagram (i.e., FIGURES 6-8) illustrate only some of the possible correlating scenarios and patterns that may be executed by, or within, electronic devices 102a-102c. Some of these operations may be deleted or removed where appropriate, or these operations may be modified or changed considerably without departing from the scope of the present disclosure. In addition, a number of these operations have been described as being executed concurrently with, or in parallel to, one or more additional operations. However, the timing of these operations may be altered considerably. The preceding operational flows have been offered for purposes of example and discussion. Substantial flexibility is provided by electronic devices 102a-102c in that any suitable arrangements, chronologies, configurations, and timing mechanisms may be provided without departing from the teachings of the present disclosure.

Although the present disclosure has been described in detail with reference to particular arrangements and configurations, these example configurations and arrangements may be changed significantly without departing from the scope of the present disclosure. Moreover, certain components may be combined, separated, eliminated, or added based on particular needs and implementations. Additionally, although electronic devices 102a-102c have been illustrated with reference to particular elements and operations that facilitate the communication process, these elements and operations may be replaced by any suitable architecture, protocols, and/or processes that achieve the intended functionality of electronic devices 102a-102c.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

### OTHER NOTES AND EXAMPLES

Example A1, is an electronic device including a user facing camera to capture a video stream of a user, a display presenting content, and display illumination logic determine the user is insufficiently illuminated in the video stream, in response to the determination, reconfigure a first portion of the display as an illumination region and a second portion of the display as a content region, and increase a brightness of one or more pixels in the illumination region to better illuminate the user.

In Example A2, the subject matter of Example A1 can optionally include where reconfiguring the portion of the display as an illumination region and a second portion of the display as a content region includes scaling the content to fit in within the second portion of the display.

In Example A3, the subject matter of any one of Examples A1-A2 can optionally include where the display includes micro light emitting diodes (microLEDs) and the illumination region of the display includes microLEDs at full brightness.

In Example A4, the subject matter of any one of Examples A1-A3 can optionally include where the video stream from the user facing camera is analyzed to determine that the user is insufficiently illuminated in the video stream.

In Example A5, the subject matter of any one of Examples A1-A4 can optionally include where dimensions and location of the illumination region is dependent on a current illumination of the user.

In Example A6, the subject matter of any one of Examples A1-A5 can optionally include where the brightness of the one or more pixels in the illumination region is dependent on a current illumination of the user.

In Example A7, the subject matter of any one of Examples A1-A6 can optionally include a light sensor, where output from the light sensor is used to determine that the user is insufficiently illuminated.

In Example A8, the subject matter of any one of Examples A1-A7 can optionally include where the content is a video conference.

In Example A9, the subject matter of any one of Examples A1-A8 can optionally include where the illumination region is a ring shape surrounding the content region to simulate a ring light.

Example M1 is a method including capturing content using a user facing camera, displaying the content on a display, determining that the content is insufficiently illuminated, in response to the determination, reconfiguring a first portion of the display as an illumination region and a second portion of the display as a content region, and increasing a brightness of one or more pixels in the illumination region to better illuminate the content.

In Example M2, the subject matter of Example M1 can optionally include scaling the content to fit in within the content region of the display when the first portion of the display is reconfigured as an illumination region and the second portion of the display is reconfigured as a content region.

In Example M3, the subject matter of any one of the Examples M1-M2 can optionally include the display includes micro light emitting diodes (microLEDs) and the illumination region of the display includes microLEDs at full brightness.

In Example M4, the subject matter of any one of the Examples M1-M3 can optionally include where the captured content is a video stream of a user and the video stream from the user facing camera is analyzed to determine that the user is insufficiently illuminated in the video stream.

In Example M5, the subject matter of any one of the Examples M1-M4 can optionally include where dimensions and location of the illumination region is dependent on a current illumination of the user.

Example S1 is a system including one or more processors, a user facing camera to capture a video stream of a user, a display presenting content, and display illumination logic. The display illumination logic can cause the one or more processors to, determine the user is insufficiently illuminated in the video stream, in response to the determination, reconfigure a first portion of the display as an illumination region and a second portion of the display as a content region, and increase a brightness of one or more pixels in the illumination region to better illuminate the user.

In Example S2, the subject matter of Example S1 can optionally include where reconfiguring the portion of the display as an illumination region and a second portion of the display as a content region includes scaling the content to fit in within the second portion of the display.

In Example S3, the subject matter of any one of the Examples S1-S2 can optionally include where the display includes micro light emitting diodes (microLEDs) and the illumination region of the display includes microLEDs at full brightness.

In Example S4, the subject matter of any one of the Examples S1-S3 can optionally include where the video stream from the user facing camera is analyzed to determine that the user is insufficiently illuminated in the video stream.

In Example S5, the subject matter of any one of the Examples S1-S4 can optionally include where dimensions and location of the illumination region is dependent on a current illumination of the user.

In Example S6, the subject matter of any one of the Examples S1-S5 can optionally include a light sensor, where output from the light sensor is used to determine that the user is insufficiently illuminated.

## Claims

1. An electronic device comprising:
a user facing camera to capture a video stream of a user;
a display presenting content; and
display illumination logic to:
determine the user is insufficiently illuminated in the video stream;
in response to the determination, reconfigure a first portion of the display as an illumination region and a second portion of the display as a content region; and
increase a brightness of one or more pixels in the illumination region to better illuminate the user.

2. The electronic device of Claim 1, wherein reconfiguring the portion of the display as an illumination region and a second portion of the display as a content region includes scaling the content to fit in within the second portion of the display.

3. The electronic device of any of Claims 1 and 2, wherein the display includes micro light emitting diodes (microLEDs) and the illumination region of the display includes microLEDs at full brightness.

4. The electronic device of any of Claims 1-3, wherein the video stream from the user facing camera is analyzed to determine that the user is insufficiently illuminated in the video stream.

5. The electronic device of any of Claims 1-4, wherein dimensions and location of the illumination region is dependent on a current illumination of the user.

6. The electronic device of any of Claims 1-5, wherein the brightness of the one or more pixels in the illumination region is dependent on a current illumination of the user.

7. The electronic device of any of Claims 1-6, further comprising:
a light sensor, wherein output from the light sensor is used to determine that the user is insufficiently illuminated.

8. A method comprising:
capturing content using a user facing camera;
displaying the content on a display;
determining that the content is insufficiently illuminated;
in response to the determination, reconfiguring a first portion of the display as an illumination region and a second portion of the display as a content region; and
increasing a brightness of one or more pixels in the illumination region to better illuminate the content.

9. The method of Claim 8, further comprising:
scaling the content to fit in within the content region of the display when the first portion of the display is reconfigured as an illumination region and the second portion of the display is reconfigured as a content region.

10. The method of any of Claims 8 and 9, wherein the display includes micro light emitting diodes (microLEDs) and the illumination region of the display includes microLEDs at full brightness.

11. The method of any of Claims 8-10, wherein the captured content is a video stream of a user and the video stream from the user facing camera is analyzed to determine that the user is insufficiently illuminated in the video stream.

12. The method of any of Claims 8-11, wherein dimensions and location of the illumination region is dependent on a current illumination of the user.

13. A system comprising:
one or more processors;
a user facing camera to capture a video stream of a user;
a display presenting content; and
display illumination logic to cause the one or more processors to:
determine the user is insufficiently illuminated in the video stream;
in response to the determination, reconfigure a first portion of the display as an illumination region and a second portion of the display as a content region; and
increase a brightness of one or more pixels in the illumination region to better illuminate the user.

14. The system of Claim 13, wherein reconfiguring the portion of the display as an illumination region and a second portion of the display as a content region includes scaling the content to fit in within the second portion of the display.

15. The system of any of Claims 13 and 14, wherein the video stream from the user facing camera is analyzed to determine that the user is insufficiently illuminated in the video stream.
